# EUROPÄISCHE PATENTANMELDUNG

(11) **EP 3 269 574 A1**
(43) Veröffentlichungstag der Anmeldung: **17.01.2018**
(21) Anmeldenummer: 17177769.1
(22) Anmeldetag: 26.06.2017
(51) Int. Cl.: B60J 1/00, E06B 1/32, B60J 1/14

(54) **FENSTERVORRICHTUNG**

(30) Priorität: 14.07.2016 DE 202016103814 U
(71) Anmelder: Schweitzer, Christian, 88662 Überlingen (DE)
(72) Erfinder: Schweitzer, Christian, 88662 Überlingen (DE)
(74) Vertreter: Daub, Thomas

(57) **Zusammenfassung**

Die Erfindung geht aus von Fenstervorrichtung, insbesondere für ein Kraftfahrzeug, mit einem umlaufenden Rahmenmodul (14), dass dazu vorgesehen ist, fest mit einer Wandung (12) verbunden zu werden, wobei das Rahmenmodul (14) zumindest ein innenseitiges Rahmenteil (18) und ein außenseitiges Rahmenteil (20) umfasst, die dazu vorgesehen sind, bei einer Montage an der Wandung (12) miteinander verbunden zu werden.

## Beschreibung

### Stand der Technik

Die Erfindung betrifft eine Fenstervorrichtung.

Es ist bereits eine Fenstervorrichtung, insbesondere für ein Kraftfahrzeug, mit einem umlaufenden Rahmenmodul, dass dazu vorgesehen ist, fest mit einer Wandung verbunden zu werden, vorgeschlagen worden.

Die Aufgabe der Erfindung besteht insbesondere darin, eine gattungsgemäße Vorrichtung mit verbesserten Eigenschaften hinsichtlich eines Komforts, einer Dichtheit, einer Optik und/oder einer Montagefreundlichkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Fenstervorrichtung, insbesondere für ein Kraftfahrzeug, mit einem umlaufenden Rahmenmodul, dass dazu vorgesehen ist, fest mit einer Wandung verbunden zu werden.

Es wird vorgeschlagen, dass das Rahmenmodul zumindest ein innenseitiges Rahmenteil und ein außenseitiges Rahmenteil umfasst, die dazu vorgesehen sind, bei einer Montage an der Wandung miteinander verbunden zu werden. Unter einer "Fenstervorrichtung" soll dabei insbesondere eine Vorrichtung verstanden werden, die zumindest einen Teil eines Fensters, oder ein gesamtes Fenster ausbildet. Dabei wird die Fenstervorrichtung vorzugsweise in einem Kraftfahrzeug, wie insbesondere einem Wohnmobil oder einer Offroad-Wohnkabine für ein Kraftfahrzeug verwendet, wobei es grundsätzlich auch denkbar ist, dass die Fenstervorrichtung auch im Hochbau, oder im Bereich von Wohnmobilen eingesetzt wird. Unter einem "Kraftfahrzeug" soll dabei insbesondere ein Wohnmobil oder ein Offroad-Caravan verstanden werden. Unter einem "Rahmenmodul" soll dabei insbesondere ein die Fenstervorrichtung in zumindest einer Ebene nach außen abschließender tragender Rahmen verstanden werden, der die Fenstervorrichtung mit einer Wandung verbindet. Dabei ist das Rahmenmodul vorzugsweise aus zumindest zwei Rahmenteilen ausgebildet, die bei einer Montage an der Wandung miteinander fest verbunden werden. Unter einem "innenseitigen Rahmenteil" soll dabei insbesondere ein Teil des Rahmenmoduls verstanden werden, das einen Teil des Rahmenmoduls ausbildet, der einer Innenseite der Wandung, an der das Rahmenmodul angebracht ist, zugewandt ist. Unter einem "außenseitigen Rahmenteil" soll dabei insbesondere ein Teil des Rahmenmoduls verstanden werden, das einen Teil des Rahmenmoduls ausbildet, der einer Außenseite der Wandung, an der das Rahmenmodul angebracht ist, zugewandt ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter "fest verbunden" soll dabei insbesondere über eine form-, stoff- und/oder kraftschlüssige Verbindung fest zueinander fixiert verstanden werden. Unter einer "Wandung" soll dabei insbesondere eine einen Raum begrenzende Wand verstanden werden, die vorzugsweise im Wesentlichen senkrecht zum Boden ausgerichtet ist, wobei die Wandung vorzugsweise einen Innenraum einer Wohnkabine ausbildet. Dabei weist die Wandung vorzugsweise eine einheitliche Dicke auf, wobei es ebenfalls denkbar ist, dass die Wandung unterschiedliche Dicken aufweist. Eine Dicke der Wandung kann dabei zwischen 10 mm und 100 mm liegen. Vorzugsweise hat die Wandung eine Dicke von 40 mm oder 60 mm. Unter einer "Montage an der Wandung" soll dabei insbesondere eine feste Anbringung des Rahmenmoduls an der Wandung verstanden werden, wobei die Montage dabei in eine fertige Wandung mit einer entsprechend der Größe des Rahmenmoduls angepassten Ausnehmung in der Wandung erfolgt. Dabei ist es denkbar, dass die Ausnehmung vor der Montage des Rahmenmoduls durch einen Laien an einer gewünschten Stelle der geschlossenen Wandung eingebracht wird. Dabei werden die beiden Rahmenteile vorzugsweise mittels einer Stoffschlussverbindung, wie insbesondere einer Klebeverbindung und/oder einer Schraubenverbindung fest und starr miteinander verbunden. Dadurch kann eine besonders vorteilhafte Fenstervorrichtung bereitgestellt werden, die einfach und schnell in Wandungen mit unterscherschiedlichen Dicken eingebracht werden kann, wodurch insbesondere hohe Kosten und ein hoher Zeitaufwand für eine Montage der Fenstervorrichtung eingespart werden können.

Weiter wird vorgeschlagen, dass die Rahmenteile jeweils einen Überstand von maximal 10 mm aufweisen. Unter einem "Überstand" soll dabei insbesondere ein maximaler Abstand zwischen der Oberfläche der Wandung und der äußersten Oberfläche eines Rahmenteils verstanden, wobei der Abstand dabei senkrecht zu der Oberfläche der Wandung gemessen ist. Unter "maximal 10 mm" soll dabei insbesondere verstanden werden werden, dass ein Überstand maximal 10 mm, vorzugsweise maximal 5 mm und in einer besonders vorteilhaften Ausgestaltung maximal 2 mm beträgt. Dadurch kann vorteilhaft eine Außenkontur der Wandung und der Fenstervorrichtung erreicht werden, wobei ein Übergang zwischen Wandung und Fenstervorrichtung besonders vorteilhaft klein ausgebildet werden, wodurch störende Überhänge vermieden werden können.

Ferner wird vorgeschlagen, dass ein Rahmenteil zumindest einen Grundkörper aus einem Wärmedämmmaterial und eine äußere Wandung umfasst. Unter einem "Grundkörper" soll dabei insbesondere ein tragender Teil des Rahmenteils verstanden werden, der vorzugsweise einen Großteil des Rahmenteils ausmacht. Dabei ist der Grundkörper vorzugsweise aus einem einstückigen Vollmaterial, wie insbesondere einem Kunst- und/oder Schaumstoff gebildet. Unter einem "Wärmedämmmaterial" soll dabei insbesondere ein Material mit besonders vorteilhaften Wärmedämmeigenschaften verstanden werden, das einen Wärmedurchgangskoeffizienten aufweist, der in einem Bereich von 0,5 W/m²K - 5 W/m²K liegt. Dabei ist unter einem Wärmedämmmaterial insbesondere ein Schaumstoff zu verstehen, der vorzugsweise als ein Schaumstoff auf Polyurethan-Hartschaum Basis nach DIN EN 13165 ausgebildet ist. Unter einer "äußeren Wandung" soll dabei insbesondere ein Teil des Rahmenteils verstanden werden, das das Rahmenteil nach außen abschließt, wobei die äußere Wandung dabei vorzugsweise von einer ebenen Platte gebildet ist. Dabei ist die äußere Wandung vorzugsweise von einem Aluminiumblech gebildet. Grundsätzlich ist es auch denkbar, dass die äußere Wandung eines Rahmenteils aus einem anderen, dem Fachmann als sinnvoll erscheinenden Material gebildet ist, wie beispielsweise einem anderen Metallblech, einer Faserverbundplatte, oder einem Kunststoff. Dadurch kann ein Rahmenteil besonders vorteilhaft ausgebildet werden und die Fenstervorrichtung besonders vorteilhaft wärmegedämmt ausgebildet werden.

Es wird weiterhin vorgeschlagen, dass die beiden Rahmenteile dazu vorgesehen sind, zumindest über eine Klebeverbindung fest miteinander verbunden zu werden. Unter " zumindest über eine Klebeverbindung" soll dabei insbesondere verstanden werden, dass die Rahmenteile zumindest über eine adhäsive Verbindung mittels eines Klebers miteinander verbunden sind, allerdings auch eine zusätzliche Verbindung über einen Formschluss, beispielsweise über eine Schraubenverbindung zwischen den beiden Rahmenteilen bestehen kann. Dadurch können die beiden Rahmenteile besonders gut miteinander verbunden werden.

Des Weiteren wird vorgeschlagen, dass die Fenstervorrichtung ein in dem umlaufenden Rahmenmodul schwenkbar gelagertes Fenstermodul aufweist. Unter einem "Fenstermodul" soll dabei insbesondere ein Modul aus einem flachen Fensterelement, das vorzugsweise zumindest teilweise durchlässig für sichtbares Licht ist, verstanden werden. Dabei ist es denkbar, dass das Fenstermodul lediglich aus einem flachen Fensterelement besteht, oder dass das Fensterelement von einem umlaufenden Rahmen begrenzt ist. Dabei ist das Fensterelement vorzugsweise aus einem doppelten Echtglasfenster gebildet. Grundsätzlich ist es auch denkbar, dass das Fensterelement aus einem PMMA, einem PVC, einem PC, einem PET oder einem anderen durchsichtigen Kunststoff gebildet ist. Unter "schwenkbar gelagert" soll dabei insbesondere verstanden werden, dass die Fenstervorrichtung über eine Lagereinheit so mit dem Rahmenmodul verbunden ist, dass es zwischen einem geöffneten Zustand und einem geschlossenen Zustand verschwenkt werden kann. Dadurch kann die Fenstervorrichtung besonders vorteilhaft ausgebildet werden.

Weiterhin wird vorgeschlagen, dass die Fenstervorrichtung eine Lagereinheit zur Lagerung des Fenstermoduls aufweist, die zumindest eine Schwenkachse ausbildet, die in einem oberen Bereich des Fenstermoduls angeordnet ist. Unter einer "Lagereinheit" soll dabei insbesondere eine Einheit verstanden werden, über die wenigstens zwei Bauteile über zumindest eine Schwenkachse verdrehbar miteinander verbunden sind. Unter einem "oberen Bereich des Fenstermoduls" soll dabei insbesondere ein Bereich des Fenstermoduls verstanden werden, der näher einem oberen Ende des Fenstermoduls zugewandt ist als an einem unteren Ende des Fenstermoduls. Dabei ist der obere Bereich vorzugsweise als ein dem oberen Ende zugewandte Drittel des Fenstermoduls, vorzugsweise als ein dem oberen Ende zugewandtes Fünftel ausgebildet. In einer besonders vorteilhaften Ausgestaltung der Lagereinheit weist die Schwenkachse einen Abstand von weniger als 10 cm von dem oberen Ende des Fenstermoduls auf. Dadurch kann das Fenstermodul besonders vorteilhaft in dem Rahmenmodul gelagert werden, so dass eine besonders vorteilhaft große Fensteröffnung bereitgestellt werden kann.

Außerdem wird vorgeschlagen, dass die Lagereinheit dazu vorgesehen ist, eine Position der Schwenkachse bei einer Verstellung des Fenstermoduls zumindest in einem Teilbereich der Verstellung zu verändern. Unter einer "Verstellung des Fenstermoduls" soll dabei insbesondere eine Verschwenkung des Fenstermoduls relativ zu dem Rahmenmodul zwischen einem geschlossenen Zustand und einem geöffneten Zustand des Fenstermoduls verstanden werden. Unter einer "Position der Schwenkachse" soll dabei insbesondere eine Position der Schwenkachse, um die das Fenstermodul zu dem Rahmenmodul verschwenkt wird, relativ zu dem Rahmenmodul verstanden werden. Unter einem "Teilbereich der Verstellung" soll dabei insbesondere eine ein Teilbereich einer Verstellungsbewegung des Fenstermoduls relativ zu dem Rahmenmodul verstanden werden, insbesondere ein Beginn der Verstellbewegung von dem geschlossenen Zustand des Fenstermoduls in Richtung des geöffneten Zustands. Dadurch kann die Verstellbewegung des Fenstermoduls relativ zu dem Rahmenmodul besonders vorteilhaft ausgebildet werden.

Es wird weiter vorgeschlagen, dass das außenseitige Rahmenteil zumindest ein Dichtungselement aufweist, an dem ein Rahmenelement des Fenstermoduls in einem geschlossenen und in einem geöffneten Zustand des Fenstermoduls anliegt. Unter einem "Dichtungselement" soll insbesondere ein Element verstanden werden, welches zu einem Anliegen an einem Bauteil, wie insbesondere dem Fenstermodul, vorgesehen ist, wobei ein Durchtritt von Flüssigkeit zwischen dem Element und dem Bauteil ausgeschlossen ist und wobei das Element vorzugsweise elastisch ist. Das Dichtungselement ist dabei vorzugsweise als eine Dichtlippe aus einem elastischen Kunststoff gebildet. Unter einem "geschlossenen Zustand" soll dabei insbesondere ein Zustand des Fenstermoduls verstanden werden, in dem das Fenstermodul eine Stellung relativ zu dem Rahmenmodul aufweist, in der das Fenstermodul so innerhalb des Rahmenmoduls angeordnet ist, dass das Rahmenmodul und das Fenstermodul eine geschlossene Ebene ausbilden. In dem geschlossenen Zustand liegt das Fenstermodul an dafür vorgesehenen Dichtstellen des Rahmenmoduls an. In dem geschlossenen Zustand ist das Fenstermodul vorzugsweise über ein Schließmodul in der geschlossenen Stellung an dem Rahmenmodul fixiert. Unter einem "geöffneten Zustand" soll dabei insbesondere ein Zustand des Fenstermoduls verstanden werden, in dem das Fenstermodul eine Stellung relativ zu dem Rahmenmodul aufweist, in der das Fenstermodul über die Lagereinheit zu dem Rahmenmodul verschwenkt ist und so einen Raum innerhalb des Rahmenmoduls frei gibt und die Fenstervorrichtung so geöffnet ist. Darunter, dass das "Rahmenelement an dem Dichtungselement anliegt" soll dabei insbesondere verstanden werden, dass das Rahmenelement des Fenstermoduls in einem Kontakt mit dem Dichtungselement steht, wobei durch das Anliegen des Rahmenelements an dem Dichtungselement eine abgedichtete Verbindung zwischen dem Fenstermodul und dem Dichtungselement entsteht und so zwischen dem Fenstermodul und dem Rahmenmodul, an dem das Dichtungselement angebracht ist, keine Flüssigkeit treten kann. Dadurch kann die Fenstereinheit vorteilhaft so ausgebildet werden, dass ein oberes Ende des Fenstermoduls sowohl im geschlossenen Zustand als auch im geöffneten Zustand gegen Flüssigkeiten, wie insbesondere gegen Regen abgedichtet ist.

Zudem wird vorgeschlagen, dass das Fenstermodul zumindest ein Echtglasfenster umfasst. Unter einem "Echtglasfenster" soll dabei insbesondere ein Fenster aus einem Siliciumoxid verstanden werden. Unter einem Echtglasfenster soll dabei insbesondere kein Fenster aus einem Kunststoff, wie beispielsweise aus einem PMMA, einem PVC, einem PC oder einem PET verstanden werden. Dabei ist das Echtglasfenster vorzugsweise als eine Doppelverglasung ausgebildet und weist zwei durch einen abgedichteten Bereich voneinander getrennte Echtglasscheiben auf, die über einen Randverbund und/oder über das Rahmenelement des Fenstermoduls miteinander verbunden sind. Dadurch kann eine Fenstervorrichtung bereitgestellt werden, die besonders vorteilhafte Wärmedämmeigenschaften aufweist.

Weiter wird vorgeschlagen, dass das umlaufende Rahmenmodul und das schwenkbare Fenstermodul als ein Nachrüstbausatz ausgebildet sind. Unter einem "Nachrüstbausatz" soll dabei insbesondere ein Bausatz für Laien verstanden werden, der alle Wesentlichen Bauteile der Fenstervorrichtung umfassen, so dass diese von dem Laien selbst in eine von ihm gewünschte Wandung, wie beispielsweise die Wandung eines Karavans, eingebaut werden kann. Dadurch kann die Fenstervorrichtung besonders vorteilhaft für den Selbsteinbau durch einen Laien ausgebildet werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine schematische Ansicht einer Fenstervorrichtung in einem geöffneten Zustand,
- Fig. 2: eine schematische Schnittansicht der Fenstervorrichtung in einem geschlossenen Zustand,
- Fig. 3: eine schematische Schnittansicht der Fenstervorrichtung in einem maximal geöffneten Zustand und
- Fig. 4: eine schematische Detailschnittansicht der Fenstervorrichtung.

### Beschreibung des Ausführungsbeispiels

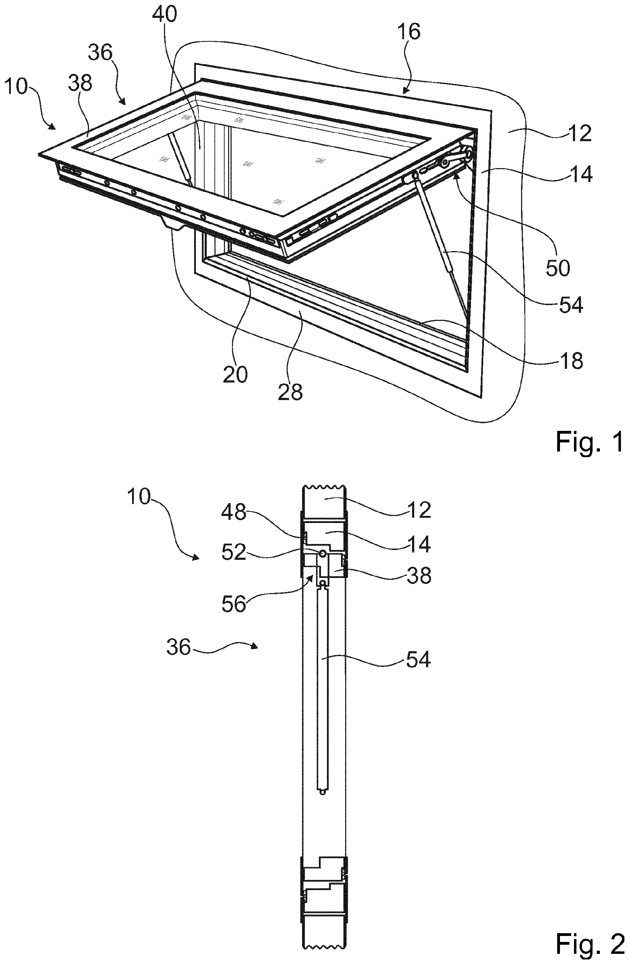

Die Figuren 1 bis 4 zeigen eine erfindungsgemäße Fenstervorrichtung 10. Die Fenstervorrichtung 10 ist zur Verwendung in einem Kraftfahrzeug, insbesondere zur Verwendung in einem Caravan vorgesehen. Grundsätzlich ist es aber auch denkbar, dass die Fenstervorrichtung 10 in einem Gebäude, wie beispielsweise einem Gewächshaus oder einem Wintergarten verwendet wird. Die Fenstervorrichtung 10 ist dazu vorgesehen, mit einer Wandung 12 verbunden zu werden, um eine verschließbare Öffnung in der Wandung 12 zu generieren. Die Wandung 12 ist dabei Teil des Kraftfahrzeugs. Die Wandung 12 ist insbesondere als eine Wand eines Aufbaus eines Caravans ausgebildet. Der Aufbau des Caravans ist dabei als eine Kabine eines Offroad-Caravans ausgebildet. Die Kabine ist dabei als eine Expeditionskabine ausgebildet. Die Kabine ist dazu vorgesehen, einen Innenraum des Caravans zu begrenzen. Die Wandungen 12, welche die Kabine bilden, sind von einer Außenschale, einer Innenschale und einem dazwischen angeordneten Dämm- und/oder Füllmaterial gebildet. Die Außenschale und die Innenschale sind dabei von einem Faserverbundwerkstoff gebildet. Die Außenschale und die Innenschale sind aus einem GFK gebildet. Grundsätzlich ist es auch denkbar, dass die Außenschale und die Innenschale aus einem anderen Faserverbundwerkstoff oder einem anderen, dem Fachmann als sinnvoll erscheinen Material gebildet ist, wie beispielsweise einem Aluminium oder einem anderen Metall. Die Außenschale und die Innenschale sind dabei als ebene, dünne Platten ausgebildet. Die Außenschale bildet eine Außenseite der Wandung 12 aus, die die Wandung 12 und damit die Kabine nach außen abgrenzt. Die Inneschale bildet eine Innenseite der Wandung 12 aus, die eine Innenseite der Kabine bildet. Das Dämm- und/oder Füllmaterial ist dabei von einem Schaum gebildet. Grundsätzlich ist es auch denkbar, dass das Dämm- und/oder Füllmaterial von einer Wabenstruktur oder einem anderen Dämm- und/oder Füllmaterial, beispielsweise Glaswolle gebildet ist. Die Wandung 12 weist dabei eine Dicke zwischen der Außenseite und der Innenseite von 40 mm auf. Grundsätzlich ist es auch denkbar, dass die Wandung 12 eine andere Dicke aufweist, die insbesondere in einem Bereich von 20 mm - 100 mm liegt. Grundsätzlich ist es auch denkbar, dass die Wandung 12 aus einem anderen, dem Fachmann als sinnvoll erscheinenden Material, wie beispielsweise aus einem Holz, oder aus einem Kunststoff gebildet ist.

Die Fenstervorrichtung 10 weist ein umlaufendes Rahmenmodul 14 auf. Das umlaufende Rahmenmodul 14 ist dazu vorgesehen, mit der Wandung 12 verbunden zu werden. Zur Anbindung der Fenstervorrichtung 10 weist die Wandung 12 eine Ausnehmung 16 auf. Die Ausnehmung 16 entspricht dabei im Wesentlichen einer Größe des Rahmenmoduls 14. Grundsätzlich ist es dabei vorteilhaft, wenn die Ausnehmung 16 zumindest um 2 mm größer ist als das Rahmenmodul 14. Zur Montage der Fenstervorrichtung 10 wird das Rahmenmodul 14 in der Ausnehmung 16 angeordnet. Die Ausnehmung 16 weist dabei einen Umriss auf, der einem Umriss des Rahmenmoduls 14 entspricht. Das Rahmenmodul 14 ist zur Kopplung mit der Wandung 12 fest in der Ausnehmung 16 fixiert und dabei form- und stoffschlüssig mit der Wandung 12 verbunden. Grundsätzlich ist es auch denkbar, dass das Rahmenmodul 14 lediglich über eine Formschlussverbindung oder eine Stoffschlussverbindung mit der Wandung 12 verbunden ist.

Das Rahmenmodul 14 weist ein innenseitiges Rahmenteil 18 und ein außenseitiges Rahmenteil 20 auf. Das innenseitige Rahmenteil 18 und das außenseitige Rahmenteil 20 bilden in einem miteinander verbundenen Zustand das Rahmenmodul 14 aus. In einem montierten Zustand sind das innenseitige Rahmenteil 18 und das außenseitige Rahmenteil 20 starr miteinander verbunden. Die beiden Rahmenteile 18, 20 sind über eine stoffschlüssige Verbindung miteinander verbunden. Die beiden Rahmenteile 18, 20 sind zusätzlich formschlüssig miteinander verbunden. Die beiden Rahmenteile 18, 20 weisen jeweils einen Grundkörper 22, 24 auf. Die Grundkörper 22, 24 der Rahmenteile 18, 20 sind jeweils aus einem Wärmedämmmaterial gebildet. Die Grundkörper 22, 24 sind insbesondere aus einem Schaumstoff auf Polyurethan-Hartschaum Basis gebildet. Grundsätzlich ist es auch denkbar, dass die Grundkörper 22, 24 aus einem anderen, dem Fachmann als sinnvoll erscheinenden Material gebildet sind, wie beispielsweise aus einem Faserverbundwerkstoff, einem Metall oder einem geeigneten Kunststoff. Die beiden Grundkörper 22, 24 sind umlaufend ausgebildet. Die Grundkörper 22, 24 bilden jeweils einen geschlossenen Ring aus. Die Grundkörper 22, 24 sind dazu vorgesehen, starr miteinander verbunden zu werden. Die Grundkörper 22, 24 weisen jeweils zueinander korrespondierend ausgebildete Anlagebereiche auf. Die Anlagebereiche der Grundkörper 22, 24 sind L-Förmig ausgebildet. In den L-Förmigen Anlagebereichen liegen die Grundkörper 22, 24 in einem montierten Zustand aneinander an. Die Grundkörper 22, 24 sind dabei vorzugsweise aus einem Vollmateriel in spanender Bearbeitung gefertigt, wobei hier einfach ein gewünschtes Profil erreicht werden kann, das besonders einfach auf eine entsprechende Dicke der Wandung 12 angepasst werden kann. Das Rahmenmodul 14 weist eine Vielzahl an Schraubenelementen 30, 32 auf, über die die beiden Grundkörper 22, 24 ebenfalls miteinander verbunden sind, wobei in den Zeichnungen lediglich zwei Schraubenelemente 30, 32 exemplarisch dargestellt sind. Das Rahmenmodul 14 weist insbesondere zwölf Schraubenelementen 30, 32 auf, über die die beiden Grundkörper 22, 24 miteinander verbunden sind. Grundsätzlich ist es ebenso denkbar, dass das Rahmenmodul 14, je nach Größe eine andere Anzahl an Schraubenelemente 30, 32, die insbesondere größer ist als zwölf, aufweist. Die Schraubenelemente 30, 32 sind als Senkschrauben ausgebildet. Zur Aufnahme der Schraubenelemente 30, 32 weist der Grundkörper 24 des außenseitigen Rahmenteils 20 jeweils Senkbohrungen auf. Zur Befestigung der Schraubenelemente 30, 32 weist der Grundkörper 22 des innenseitigen Rahmenteils 18 jeweils eine Gewindebohrung auf, die korrespondierend zu der Senkbohrung des Grundkörpers 24 ausgebildet ist. Über die jeweiligen Senkbohrungen des Grundkörpers 24, die Gewindebohrungen des Grundkörpers 22 und die jeweiligen Schraubenelemente 30, 32 sind die Grundkörper 22, 24 formschlüssig miteinander verbunden. Grundsätzlich ist es auch denkbar, dass die beiden Grundkörper 22, 24 über eine andere Anzahl an Schraubenelementen 30, 32 und entsprechende Senk- bzw. Gewindebohrungen miteinander formschlüssig verbunden sind.

Die Rahmenteile 18, 20 weisen jeweils eine äußere Wandung 26, 28 auf. Der Grundkörper 22 und die äußere Wandung 26 bilden zusammen das innenseitige Rahmenteil 18 aus. Der Grundkörper 24 und die äußere Wandung 28 bilden zusammen das außenseitige Rahmenteil 20 aus. Die äußeren Wandungen 26, 28 sind dabei fest mit dem jeweiligen Grundkörper 22, 24 verbunden. Die äußeren Wandungen 26, 28 sind dabei jeweils über eine Klebeverbindung mit dem jeweiligen Grundkörper 22, 24 verbunden. Grundsätzlich ist es auch denkbar, dass die äußeren Wandungen 26, 28 auf eine andere Weise form- und/oder stoffschlüssig mit dem jeweiligen Grundkörper 22, 24 verbunden sind, wie beispielsweise über Formschlusselemente oder Falzungen. Die äußeren Wandungen 26, 28 sind von ebenen Platten gebildet. Dabei sind die äußeren Wandungen 26, 28 aus dünnen Aluminiumplatten gebildet. Grundsätzlich ist hierbei auch ein Faserverbundwerkstoff als Werkstoff für die äußeren Wandungen 26, 28 denkbar. In einem an der Wandung 12 montierten Zustand liegen die äußeren Wandungen 26, 28 der Rahmenteile 18, 20 des Rahmenmoduls 14 mit einander zugewandten Innenseiten an der Innenseite bzw. der Außenseite der Wandung 12 an.

Die beiden Rahmenteile 18, 20 des Rahmenmoduls 14 werden zu einer Montage des Rahmenmoduls 14 an der Wandung 12 fest miteinander verbunden. Das außenseitige Rahmenteil 20 wird dabei von außen an die Außenseite der Wandung 12 angelegt, so dass die äußere Wandung 28 des Rahmenteils 20 an der Außenseite er Wandung 12 anliegt. Das innenseitige Rahmenteil 18 wird von innen an die Wandung 12 angelegt und in entsprechender Weise an dem außenseitigen Rahmenteil 20 angelegt. Dabei liegt die äußere Wandung 26 des innenseitigen Rahmenteils 18 an der Innenseite der Wandung 12 an. Dabei wird in einen Zwischenraum 34 zwischen den Rahmenteilen 18, 20 und der Wandung 12 ein Klebstoff eingebracht. Das Rahmenmodul 14 wird durch eine Klebeverbindung mit der Wandung 12 verbunden. Zusätzlich fixiert eine Klemmkraft zwischen den äußeren Wandungen 26, 28 der Rahmenteile 18, 20 und der Wandung 12 das Rahmenmodul 14 an der Wandung 12. Sind die beiden Rahmenteile 18, 20 korrekt zueinander positioniert, werden sie mittels den Schraubenelementen 30, 32 miteinander verbunden. In dem an der Wandung 12 montierten Zustand weisen die Rahmenteile 18, 20 jeweils einen Überstand von 5 mm auf. Die Außenseiten der äußeren Wandungen 26, 28 stehen jeweils lediglich um 5 mm von der jeweiligen Außenseite bzw. Innenseite der Wandung 12 ab.

Die Fenstervorrichtung 10 weist ein Fenstermodul 36 auf. Das Fenstermodul 36 ist schwenkbar an dem Rahmenmodul 14 gelagert. Das Fenstermodul 36 ist dazu vorgesehen, das Rahmenmodul 14 zu schließen oder freizugeben. Das Fenstermodul 36 umfasst ein Rahmenelement 38. Das Rahmenelement 38 des Fenstermoduls 36 ist als ein umlaufender Rahmen ausgebildet. Das Rahmenelement 38 des Fenstermoduls 36 ist dazu vorgesehen, in zumindest einem Zustand mit dem Rahmenmodul 14 der Fenstervorrichtung 10 abgedichtet gekoppelt zu werden. Das Rahmenelement 38 des Fenstermoduls 36 ist korrespondierend zu dem Rahmenmodul 14 der Fenstervorrichtung 10 ausgebildet. Dazu bildet das Rahmenelement 38 des Fenstermoduls 36 einen umlaufenden Anlagebereich auf, der korrespondierend zu einem umlaufenden Anlagebereich des Rahmenmoduls 14 der Fenstervorrichtung 10 ausgebildet ist. Das Fenstermodul 36 ist als ein Isolierfenster ausgebildet. Das Fenstermodul 36 weist ein erstes Fensterelement 40 und ein zweites Fensterelement 42 auf. Die beiden Fensterelemente 40, 42 sind dabei als Echtglasfenster ausgebildet. Grundsätzlich ist es auch denkbar, dass das Fenstermodul 36 eine andere Anzahl an Fensterelementen 40, 42 aufweist, die grundsätzlich auch aus einem anderen Material gebildet sein können, wie beispielsweise aus einem PMMA, einem PVC, einem PC oder einem PET. Die beiden Fensterelemente 40, 42 sind beabstandet zueinander mit dem Rahmenelement 38 des Fenstermoduls 36 verbunden, wodurch zwischen den Fensterelementen 40, 42 ein abgedichteter Isolierbereich gebildet wird. An einer Außenseite weist das Rahmenelement 38 des Fenstermoduls 36 einen umlaufenden Überstand 44 aus. Der Überstand 44 erstreckt sich bis in einen Bereich des Rahmenmoduls 14 und überdeckt so in einem geschlossenen Zustand des Fenstermoduls 36 einen Bereich zwischen dem Rahmenmodul 14 und dem Rahmenelement 38 des Fenstermoduls 36. Dadurch kann ein Bereich zwischen dem Rahmenmodul 14 und dem Rahmenelement 38 des Fenstermoduls 36 besonders einfach und vorteilhaft ausgebildet werden. Der Überstand 44 ist von einer mit dem Rahmenelement 38 verbundenen Platte 46 gebildet. Die Platte 46 weist dabei die Form eines umlaufenden Rahmens auf. Die Platte 46 weist dabei einen gleichen Überstand auf, wie die äußere Wandung 28 des außenseitigen Rahmenteils 20.

Dadurch schließt das Rahmenelement 38 des Fenstermoduls 36 an einer Außenseite der Wandung 12 eben mit dem Rahmenmodul 14 ab.

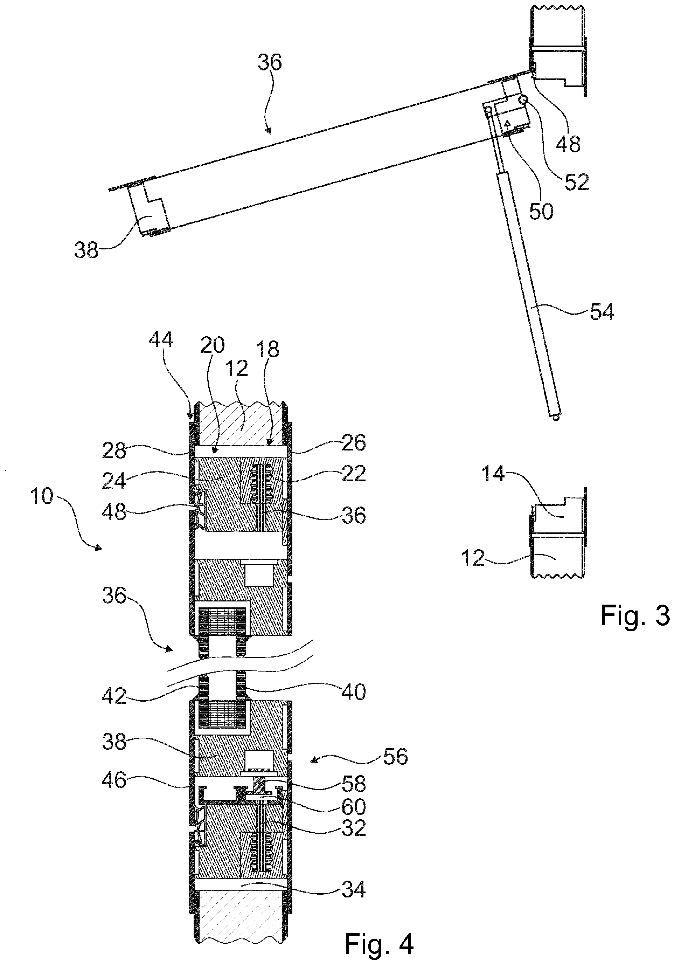

Das Fenstermodul 36 kann zwischen einem geschlossenen Zustand und einem geöffneten Zustand verschwenkt werden. In einem geschlossenen Zustand liegt das Rahmenelement 38 des Fenstermoduls 36 formschlüssig in dem Rahmenmodul 14 der Fenstervorrichtung 10. Dadurch ist die Fenstervorrichtung 10 in dem geschlossenen Zustand des Fenstermoduls 36 in einer geschlossenen Stellung. In einem geöffneten Zustand des Fenstermoduls 36 ist das Rahmenelement 38 des Fenstermoduls 36 zumindest teilweise aus dem Rahmenmodul 14 heraus bewegt. Dabei gibt es verschiedene geöffnete Zustände des Fenstermoduls 10, in dem das Fenstermodul 36 mehr oder weniger aus seinem geschlossenen Zustand heraus geschwenkt ist. Das Fenstermodul 36 weist einen maximal geöffneten Zustand auf. In dem maximal geöffneten Zustand ist das Fenstermodul 36 um ca. 90 Grad zu dem Rahmenmodul 14 verschwenkt (siehe Figur 3). Das Fenstermodul 36 ist dabei in beliebigen Positionen zwischen dem geschlossenen Zustand und dem maximal geöffneten Zustand fixierbar.

Das außenliegende Rahmenteil 20 des Rahmenmoduls 14 weist ein Dichtungselement 48 auf. Das Dichtungselement 48 ist als ein umlaufendes Dichtungselement ausgebildet. Dabei läuft das Dichtungselement 48 einmal rings um das außenliegende Rahmenteil 20 des Rahmenmoduls 14. Das Dichtungselement 48 ist als eine Dichtlippe aus einem Kunststoff gebildet. Das Dichtungselement 48 ist an einer Außenseite des außenliegenden Rahmenteils 20 des Rahmenmoduls 14 angebracht und teilweise zwischen dem außenliegenden Rahmenteil 20 des Rahmenmoduls 14 und der äußeren Wandung 28 angeordnet. In einem geschlossenen Zustand des Fenstermoduls 36 liegt die Platte 46 an dem Dichtungselement 48 an und dichtet so einen Bereich zwischen dem Rahmenmodul 14 und dem Fenstermodul 36 ab.

Die Fenstervorrichtung 10 umfasst eine Lagereinheit 50. Die Lagereinheit 50 ist dazu vorgesehen, das Fenstermodul 36 schwenkbar in dem Rahmenmodul 14 zu lagern. Die Lagereinheit 50 bildet dabei eine Schwenkachse 52 aus, über die das Fenstermodul 36 schwenkbar ist. Die Schwenkachse 52 verläuft parallel zu einer Querrichtung des Fenstermoduls 36. Die Schwenkachse 52 ist in einem normal montierten Zustand horizontal ausgerichtet. Die Schwenkachse 52 der Lagereinheit 50 ist an einem oberen Ende des Fenstermoduls 36 angeordnet. Dadurch lässt sich das Fenstermodul 36 in einem montierten Zustand um das obere Ende des Fenstermoduls 36 verschwenken. Die Lagereinheit 50 ist dazu vorgesehen, eine Position der Schwenkachse 52 bei einer Verstellung des Fenstermoduls 10 zumindest in einem Teilbereich der Verstellung zu verändern. Dazu weist die Lagereinheit 50 eine nicht näher dargestellte Ausgleichseinheit auf. Die Ausgleichseinheit ist dazu vorgesehen, das Fenstermodul 36 bei einem Öffnen des Fenstermoduls 36, also bei einem Verschwenken aus dem geschlossenen Zustand heraus, zunächst in einer zumindest im Wesentlichen linearen Bewegung von dem Rahmenmodul 14 weg zu bewegen. Dabei ist es denkbar, dass es sich dabei um eine reine Linearbewegung handelt, oder dass sich das Fenstermodul 36 um eine außerhalb des Fenstermoduls 10 gelegene, von der Schwenkachse 52 der Lagereinheit 50 verschiedene imaginäre Schwenkachse dreht. Die Schwenkachse 52 wird in einem ersten Teilbereich der Verstellung des Fenstermoduls 36 aus dem geschlossenen Zustand von der Ausgleichseinheit verschoben. Die Schwenkachse 52 der Lagereinheit 50 ist dadurch nicht als eine feste Achse ausgebildet. Das Fenstermodul 36 wird in einem ersten Teilbereich der Verstellung des Fenstermoduls 10 zunächst von dem Rahmenmodul 14 weg bewegt, so dass das Fenstermodul 36 über die Schwenkachse 52 der Lagereinheit 50 rotieren kann. Durch die Lagereinheit 50 mit der Ausgleichseinheit vollzieht das Fenstermodul 36 bei seiner Verstellung eine quasi-rotatorische Bewegung. Dadurch kann das Fenstermodul 36 beim Öffnen zunächst vorteilhaft von dem Dichtungselement 48 abgehoben werden. In dem maximal geöffneten Zustand liegt die Platte 46 des Rahmenelements 38 des Fenstermoduls 36 oberhalb der Öffnung, die das Rahmenmodul 14 ausbildet, an dem Dichtungselement 48 an. Dadurch ist die Fenstervorrichtung 10 in der maximal geöffneten Stellung des Fenstermoduls 36 an dem oberen Ende des Fenstermoduls 36 abgedichtet. Dadurch kann vorteilhaft verhindert werden, dass es dort hinein regnet.

Ferner weist die Fenstervorrichtung 10 ein Federelement 54 auf, das dazu vorgesehen ist, das Fenstermodul 36 in den verschiedenen geöffneten Zuständen zu halten, in dem das Federelement 54 eine Haltekraft auf das Fenstermodul 36 ausübt. Das Federelement 54 ist an einem ersten Ende mit dem Fenstermodul 36 und an einem zweiten Ende mit dem Rahmenmodul 14 gekoppelt. Dabei ist das Federelement 54 jeweils drehbar angebunden. Das Federelement 54 ist dabei als eine Gasdruckfeder ausgebildet. Grundsätzlich ist es auch denkbar, dass das Federelement 54 als eine andere Feder ausgebildet ist, wie beispielsweise eine Hydraulikfeder, oder dass die Fenstervorrichtung 10 weitere Federelemente 54 aufweist. Weiterhin weist die Fenstervorrichtung 10 eine teilweise dargestellte Schließvorrichtung 56 auf. Die Schließvorrichtung 56 ist dazu vorgesehen, das Fenstermodul 36 in dem geschlossenen Zustand an dem Rahmenmodul 14 zu sichern. Dazu weist die Schließvorrichtung 56 an dem Fenstermodul 36 angebrachte Schließzapfen 58 auf, die zum Schließen in Schließlöcher 60 in dem Rahmenmodul 14 eingreifen und dort formschlüssig aufgenommen werden. Die Schließvorrichtung 56 weist weiter ein Hebelelement auf, das auf einer Innenseite des Fenstermoduls 36 angeordnet ist und über das die Schließzapfen 58 zwischen einer Schließstellung und einer Lösestellung verstellt werden können. Generell ist die Schließvorrichtung 56 als eine aus dem Stand der Technik bekannte Schließvorrichtung aus dem Fensterbau ausgebildet.

Das umlaufende Rahmenmodul 14 und das schwenkbare Fenstermodul 36 sind als ein Nachrüstbausatz ausgebildet. Dabei ist das Rahmenmodul 14 und das schwenkbare Fenstermodul 36 mit allen benötigten Elementen von einem Laien erwerbbar und eigenständig in eine Wandung, insbesondere in eine Wandung 12 eines Caravans einbaubar. Dazu muss lediglich eine entsprechend große Ausnehmung 16 in die Wandung 12 eingebracht werden. Dann kann das Rahmenmodul 14 entsprechend der obigen Beschreibung mit der Wandung 12 verbunden werden und das Fenstermodul 36 mit dem Rahmenmodul 14 verbunden werden. Dabei ist für den Laien vorteilhaft, dass die Ausnehmung 16 nicht exakt der Größe des Rahmenmoduls 14 entsprechen muss, da durch die Klebeverbindung zwischen dem Rahmenmodul 14 und der Wandung 12 ein gewisser Toleranzausgleich stattfindet.

## Patentansprüche

1. Fenstervorrichtung, insbesondere für ein Kraftfahrzeug, mit einem umlaufenden Rahmenmodul (14), dass dazu vorgesehen ist, fest mit einer Wandung (12) verbunden zu werden,
**dadurch gekennzeichnet, dass**
das Rahmenmodul (14) zumindest ein innenseitiges Rahmenteil (18) und ein außenseitiges Rahmenteil (20) umfasst, die dazu vorgesehen sind, bei einer Montage an der Wandung (12) miteinander verbunden zu werden.

2. Fenstervorrichtung nach Anspruch 1, **dadurch gekennzeichnet, dass** die Rahmenteile (18, 20) jeweils einen Überstand (44) von maximal 10 mm aufweisen.

3. Fenstervorrichtung nach Anspruch 1 oder 2, **dadurch gekennzeichnet, dass** ein Rahmenteil (18, 20) zumindest einen Grundkörper (22, 24) aus einem Wärmedämmmaterial und eine äußere Wandung (26, 28) umfasst.

4. Fenstervorrichtung nach einem der vorhergehenden Ansprüche, **dadurch gekennzeichnet, dass**
die beiden Rahmenteile (18, 20) dazu vorgesehen sind zumindest über eine Klebeverbindung fest miteinander verbunden zu werden.

5. Fenstervorrichtung nach einem der vorhergehenden Ansprüche,
**gekennzeichnet durch**
ein in dem umlaufenden Rahmenmodul (14) schwenkbar gelagertes Fenstermodul (36).

6. Fenstervorrichtung nach Anspruch 5, **gekennzeichnet durch**
eine Lagereinheit (50) zur Lagerung des Fenstermoduls (36), die zumindest eine Schwenkachse (52) ausbildet, die in einem oberen Bereich des Fenstermoduls (36) angeordnet ist.

7. Fenstervorrichtung nach Anspruch 6, **dadurch gekennzeichnet, dass**
die Lagereinheit (50) dazu vorgesehen ist, eine Position der Schwenkachse (52) bei einer Verstellung des Fenstermoduls (36) zumindest in einem Teilbereich der Verstellung zu verändern.

8. Fenstervorrichtung nach einem der vorhergehenden Ansprüche, **dadurch gekennzeichnet, dass**
das außenseitige Rahmenteil (20) zumindest ein Dichtungselement (48) aufweist, an dem ein Rahmenelement (38) des Fenstermoduls (36) in einem geschlossenen und in einem geöffneten Zustand des Fenstermoduls (36) anliegt.

9. Fenstervorrichtung zumindest nach Anspruch 5, **dadurch gekennzeichnet, dass** das Fenstermodul (36) zumindest ein Echtglasfenster umfasst.

10. Fenstervorrichtung nach einem der vorhergehenden Ansprüche, **dadurch gekennzeichnet, dass**
das umlaufende Rahmenmodul (14) und das schwenkbare Fenstermodul (36) als ein Nachrüstbausatz ausgebildet sind.
